# NOUVEAU FASCICULE DE BREVET EUROPEEN

(11) **EP 2 296 871 B2**
(45) Date de publication et mention de la décision concernant l'opposition: **15.05.2024**
(45) Mention de la délivrance du brevet: 30.11.2011
(21) Numéro de dépôt: 09766013.8
(22) Date de dépôt: 16.06.2009
(51) Int. Cl.: B32B 1/08, B32B 27/18, F16L 11/08, F16L 11/12

(54) **CONDUITE AVEC GAINE A PERMEABILITE REDUITE AUX COMPOSES ACIDES**
KANAL MIT HÜLLE MIT REDUZIERTER DURCHLÄSSIGKEIT FÜR SÄUREVERBINDUNGEN
DUCT WITH SHEATH HAVING REDUCED PERVIOUSNESS TO ACID COMPOUNDS

(30) Priorité: 18.06.2008 FR 0803413
(43) Date de publication de la demande: 23.03.2011
(73) Titulaire: IFP Energies nouvelles, 92500 Rueil-Malmaison (FR); TechnipFMC Subsea France, 92400 Courbevoie (FR)
(72) Inventeur: COUTAREL, Alain, F-76130 Mont Saint Aignan (FR); DEMANZE, Frédéric, F-76490 Caudebec en Caux (FR); GONZALEZ, Serge, F-69150 Decines (FR); LEFEBVRE, Xavier, F-78700 Conflans Sainte Honorine (FR); KLOPFFER, Marie-Hélène, F-78180 Montigny Le Bretonneux (FR); VINCIGUERRA, Emmanuel, F-20167 Corse (FR); DEWIMILLE, Bernard, F-91100 Corbeil Essonne (FR)
(74) Mandataire: Lavoix
(86) Numéro de dépôt international: PCT/FR2009/000719
(87) Numéro de publication internationale: WO 2009/153451

(56) Documents cités:
- EP-A- 0 818 477
- EP-A- 0 844 429
- EP-A- 1 707 350
- WO-A1-2008/113362
- DE-A1- 19 712 642
- US-A- 6 110 550
- US-A1- 2003 194 522
- US-A1- 2004 142 135
- US-A1- 2006 013 973
- US-A1- 2006 121 224
- US-A1- 2006 229 395
- US-B1- 6 362 252
- US-B2- 7 067 591
- DuPont" Ti-Pure® Titanium Dioxide; Polymers, Light and the Science ofTiO2; Du Pont; Copyright © 2007 DuPont (date a la derniere page)
- DuPont '1 Ti-Pure® R-960 Titanium Dioxide © 2007 DuPont (date a la derniere page)
- Reactivity of Clay Minerals with Acids and Alkalies", D. Carroll et al,Clays and Minerals, 1971, Vol. 19, pp. 321-333, Pergamon Press, GB
- Course web page 325, Department of Soil Science, University of Wisconsin-Madison, Last modified: Sept 8,1999© 1998
- Halogen Scavenger, DHT-4A, Kyowa Chemical Industry Co., Ltd.,Kisuma Chemicals B.V.
- Internet page DHT-4A DHT-4V www.kisuma.com/dht-4.html, Copyright© 2012 Kisuma Chemicals B.V.
- STANCO PROJECTS LTD., "Factors Affecting Lime Slaking?,Novembre 1997
- E-mail reply from Geert.Sterkendnes@bel.dupontcom date le 17.08.2012 concernant DuPont* Ti-Pure* R-960
- DuPont" Ti-Pure? R-960 Titanium Dioxide. Copyright © 2007 DuPont
- Extrait du dictionnaire Petit Robert date le juin 2000
- Norme ISO 13320-1:1999(E)
- Mictrotrac S3500 - Mictrotrac S3500 Series Particle Size Analyzer with Tri-Laser Technology
- KARIBA S.P.A LISTINO N. 2 APRILE 1995
- brochure "DHT-4A® - Acidscavenger for polymer
- Nanocrystals as stoichiometric reagents with unique surface chemistry"; J. Phys.Chem., 1996

## Description

La présente invention concerne le domaine des conduites pour le transport de fluide pétrolier comportant des composés acides tels l'hydrogène sulfuré et le dioxyde de carbone.

L'invention s'applique notamment aux hydrocarbures transportés dans des conduites susceptibles d'être sous fortes pressions, supérieures à 100 bars et à des températures élevées, supérieures à 70°C, voire 100°C, pendant de longues périodes de temps, c'est-à-dire plusieurs années. Les conduites sont notamment mises en oeuvre pour l'exploitation pétrolière en mer.

Les conduites peuvent être des tubes métalliques revêtus intérieurement d'un tube en matériau polymère. Les conduites peuvent également être des conduites flexibles constituées d'une superposition de gaines en matériau polymère et de plusieurs couches de fils métalliques enroulés en hélice.

Lors du transport de l'effluent pétrolier à forte pression et à haute température, les composés acides tels l'H₂S et le CO₂ ont tendance à migrer à travers la gaine polymère jusqu'à atteindre les parties métalliques de la conduite et provoquer de la corrosion accélérée. La corrosion présente des risques pour l'intégrité mécanique de la conduite qui est fortement sollicitée par les hautes pressions de l'effluent pétrolier et par l'environnement marin.

Le document EP 844 429 propose d'introduire, dans la gaine en matériau polymère, des produits chimiquement actifs avec les composés acides (H₂S et/ou CO₂) de manière à neutraliser irréversiblement les effets corrosifs desdits composés acides et de manière à éviter les effets corrosifs sur les parties métalliques de la conduite.

La présente invention propose de perfectionner l'enseignement du document EP 844 429 en proposant des solutions pour accroître substantiellement l'effet neutralisant des produits chimiquement actifs avec les composés acides.

De manière générale, la présente invention concerne une conduite pour transporter un effluent pétrolier selon la revendication 1.

La gaine peut comprendre l'une ou plusieurs des caractéristiques des revendications 2 à 11 prise(s) isolément ou suivant toute combinaison définie dans les revendications.

D'autres caractéristiques et avantages de l'invention seront mieux compris et apparaîtront clairement à la lecture de la description faite ci-après en se référant aux dessins parmi lesquels
- la figure 1 schématise une conduite flexible,
- la figure 2 schématise une conduite rigide,
- la figure 3 représente en détail une gaine polymère multicouche.

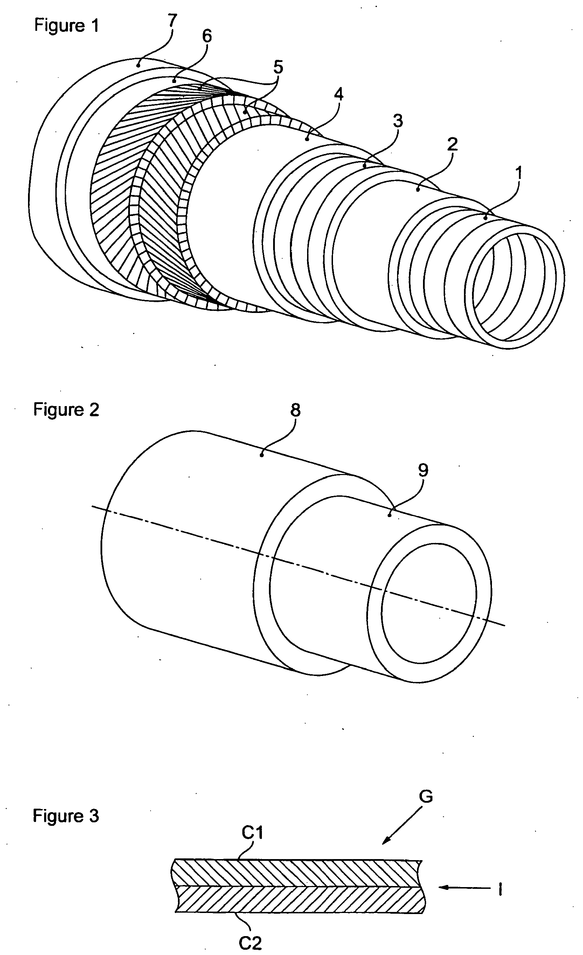

La conduite flexible représentée par la figure 1 est constituée de plusieurs couches décrites ci-après de l'intérieur vers l'extérieur de la conduite.

La carcasse 1 est constituée d'une bande métallique enroulée selon une hélice à pas court. Elle est destinée à la résistance à l'écrasement sous l'effet de la pression externe appliquée à la conduite. La bande métallique peut être réalisée à partir d'un feuillard déformé ou d'un fil, chaque spire étant agrafée aux spires adjacentes.

Les gaines d'étanchéité 2 et 4 sont réalisées par extrusion d'un matériau polymère, en général choisi parmi les polyoléfines, les polyamides et les polymères fluorés.

La voûte 3 réalisée en fils métalliques agrafés ou emboîtables assure la résistance à la pression interne dans la conduite.

Les nappes d'armures de traction 5 sont constituées par des fils métalliques enroulés en hélice selon des angles compris entre 20° et 55°. Les nappes sont maintenues par le ruban 6.

La gaine en polymère 7 forme une protection externe de la conduite.

Selon l'invention, au moins l'une des gaines d'étanchéités 2 ou 4 comportent des charges chimiquement actives avec l'H₂S et/ou le CO₂.

La conduite représentée par la figure 1 est du type "rough bore", c'est-à-dire que le fluide en circulation dans la conduite est en contact avec la carcasse 1.

Alternativement, la conduite peut être du type "smooth bore". Dans ce cas, la conduite représentée par la figure 1 ne comporte pas de carcasse 1. La gaine polymère 2 est directement en contact avec le fluide en circulation dans la conduite.

La conduite schématisée par la figure 2 est constituée d'un tube métallique 8 dont la surface interne est revêtue par une gaine d'étanchéité continue 9 en matériau polymère.

Selon l'invention, la gaine 9 comporte des charges chimiquement actives avec l'H₂S et/ou le CO₂.

Selon l'invention, les gaines d'étanchéité sont fabriquées à partir d'un mélange de matériau polymère et de charges d'agents neutralisant les composés acides, tels l'H₂S et le CO₂. Le mélange est préparé à une température supérieure à la température de fusion du matériau polymère, pendant les opérations d'extrusion de la gaine. Les charges d'agents neutralisant peuvent être réparties dans toute l'épaisseur de la gaine d'étanchéité en matériau polymère.

Compte tenu du domaine de l'invention, c'est-à-dire les conduites pétrolières rigides ou flexibles, on choisit de préférence le matériau polymère parmi les polyoléfines réticulées ou non, par exemple le polyéthylène (PE) ou le polypropylène (PP), les polyamides, par exemple le du polyamide 11 (PA-11) ou le polyamide 12 (PA-12), les polymères fluorés, par exemple le polyfluorure de vinylidène (PVDF), les polysulfures, par exemple le polysulfure de phénylène (PPS), les polyuréthannes (PU), les polyesters, les polyacétals, les polyethers, par exemple le polyethersulfone (PES), les polyétheréthercétone (PEEK), et les caoutchoucs tels que le caoutchouc butyl.

Les agents neutralisants les composés acides sont choisis parmi les oxydes métalliques PbO, ZnO, NiO, CoO, CdO, CuO, SnO₂, MoO₃, Fe₃O₄, Ag₂O, CrO₂, CrO₃, Cr₂O₃.

On peut utiliser un type d'agent neutralisant. On peut également mettre en oeuvre une combinaison de différents agents neutralisants, par exemple une combinaison de plusieurs oxydes métalliques.

Pour les agents neutralisants mentionnés ci-dessus, le principe de réaction consiste à passer des dérivés oxydés à des dérivés sulfurés (dans le cas d'une réaction avec H₂S) ou carbonatés (dans le cas d'une réaction avec CO₂).

Selon l'invention, la proportion massique des agents neutralisants les composés acides peut être comprise entre 10% et 50% massique. En effet, pour des concentrations massiques inférieures à 10%, l'épaisseur de la gaine 9 nécessaire pour obtenir une efficacité acceptable, pourrait être trop importante pour pouvoir être insérée dans la conduite flexible. Pour des concentrations massiques en agents neutralisant les composés acides supérieures à 50%, les propriétés de résistance mécanique de la gaine 9 pourrait être incompatibles avec l'application.

Selon l'invention, on choisit des charges d'agent neutralisant les composés acides qui présentent une surface spécifique supérieure à 5 m²/g et de préférence au moins supérieure à 20 m²/g. De manière préférée, la surface spécifique de l'agent neutralisant peut être inférieure à 50 m²/g. En effet, les inventeurs ont découvert que la surface spécifique des charges est critique pour déterminer la tenue à la corrosion des parties métalliques de la conduite. Pour une même fraction massique de charges d'agent neutralisant dans la matrice, l'efficacité de ladite charge est d'autant plus importante que sa surface spécifique est grande. En effet, l'efficacité d'une charge réactive dans une gaine polymère est reliée au rendement massique de la charge, c'est-à-dire au nombre de moles de charges réactives qui vont réagir avec les composés acides ainsi qu'au temps nécessaire au passage d'une mole de composé acide à travers la gaine polymère chargée. Il a été montré (voir notamment les exemples présentés ci-après) que plus la surface spécifique de la charge réactive est importante, plus les réactions acides-charges sont importantes en surface de la charge et plus le temps nécessaire au passage de molécules actives à travers la gaine polymère chargée est grand. Ce qui correspond pour une fraction massique de charges réactives donnée, à une plus grande efficacité de ladite charge.

Il est à noter que les rendements massiques obtenus sont toujours strictement inférieurs à 100%. Il reste donc des parties de charges réactives non réagies et donc des composés acides parviennent à traverser l'épaisseur de gaine polymère chargée bien que toutes les charges n'aient pas réagi.

D'autre part, dans le cadre de la réalisation de conduites flexibles on vise à réduire le volume et le poids des structures. L'efficacité de la gaine 9 est d'autant plus importante que son volume et son poids sont moindres et donc que son épaisseur est faible. La masse volumique des polymères organiques utilisés dans le cadre de l'invention est relativement faible et généralement comprise entre 0,9 g/cm³ et 1,8 g/cm³. On comprend bien dans le cadre de l'invention l'importance de la quantité d'agents neutralisant des composés acides, dont la masse volumique peut être supérieure à 5 g/cm³, influent sur l'efficacité donc de l'épaisseur de la gaine 9. En conséquence, la présente invention propose d'optimiser la taille et la surface accessible pour un même agent neutralisant les composés acides afin d'utiliser au mieux la capacité de neutralisation dudit agent dispersé dans la gaine.

Une méthode standard pour mesurer la surface spécifique est basée sur l'adsorption physique d'azote sur la surface d'un solide (méthode BET : Brunauer, Emmett, Teller).

Afin d'illustrer l'importance de la taille et de la surface accessible de la charge ou des charges, on a réalisé des mélanges polyéthylène 3802S (produit par TOTAL Petrochemical) avec des charges de différentes granulométries, de facteurs de forme variables et de surfaces spécifiques différentes, à l'aide d'un malaxeur de type HAAKE. Le mélange est réalisé à 170°C avec une vitesse de rotation des pales de 32 tours par minute pendant 10 minutes. La mise en forme du mélange sous forme de plaques de 7,5 mm d'épaisseur est réalisée à 170°C pendant une minute à une pression de 200 bars à l'aide d'une presse à plateaux. Afin de juger de l'efficacité de la membrane active, un échantillon circulaire de 12 à 24 mm de diamètre est découpé à l'aide d'un emporte pièce puis soumis dans un réacteur en inox à une pression d'H₂S pur donnée durant un temps déterminé. Au terme de l'expérience, l'échantillon cylindrique est coupé en deux parties égales. Une analyse de détection de soufre est réalisée sur la tranche de l'échantillon par microsonde de Castaing. L'efficacité de la membrane active est directement reliée à l'avancée et à la forme du front de soufre au coeur de l'échantillon.

### Influences de la granulométrie et de la surface spécifique

Les exemples comparatifs du tableau 1 sont réalisés avec du PE3802S contenant 29% en poids d'oxyde de Zinc, et illustrent l'influence de la granulométrie sur la mesure de l'avancée du front de soufre au coeur de l'échantillon.

**Tableau 1**

| Exemple | Granulométrie de l'oxyde de Zinc (Microns) | P H₂S (bar) | Temps (h) | Avancée relative du front de soufre (%) |
|---|---|---|---|---|
| 1 | 0,84 | 1 | 336 | 100 |
| 2 | 0,21 | 1 | 336 | 90,2 |
| 3 | 0,11 | 1 | 336 | 83,4 |

Les exemples 1 à 3 montrent bien qu'à fraction massique de charges réactives constante, une granulométrie plus faible permet de limiter l'avancée du soufre dans l'échantillon. De préférence, on utilise des charges réactives nanométriques, c'est-à-dire dont la granulométrie est inférieure à 1 µm.

Les exemples comparatifs du tableau 2 sont réalisés avec du PE3802S contenant 29% en poids d'oxyde de Zinc, et illustrent l'influence de la surface spécifique sur la mesure de l'avancée du front de soufre au coeur de l'échantillon.

**Tableau 2**

| Exemple | Surface spécifique de l'oxyde de Zinc (m²/g) | P H₂S (bar) | Temps (h) | Avancée relative du front de soufre (%) |
|---|---|---|---|---|
| 4 | 8 | 1 | 48 | 100 |
| 5 | 22 | 1 | 48 | 76,7 |
| 6 | 28 | 1 | 48 | 57 |

Les exemples 4 à 6 montrent bien qu'une surface spécifique importante permet de limiter l'avancée du front de soufre au sein de la matrice polymère et retarde donc l'instant où les composés acides traversent l'épaisseur de la gaine polymère. La présente invention propose d'utiliser des charges dont la surface spécifique est supérieure à 5 m²/g, de préférence au moins supérieure à 20 m²/g.

Dans certains cas, le mélange de matériau polymère et de charges d'agents neutralisant peut se dégrader lors de l'opération d'extrusion : de l'eau générée par réaction entre le polymère et la charge peut produire par exemple une dégradation du polymère par hydrolyse de la chaîne macromoléculaire. Pour limiter les réactions non désirées entre la charge et le polymère, on peut encapsuler ou enrober la charge. La présence d'une couche supplémentaire entre le matériau polymère et la charge réactive permet d'éviter des problèmes de dégradation de la matrice polymère en limitant le contact entre le polymère et la charge réactive. Cependant, on choisit une couche supplémentaire perméable aux molécules acides de façon à permettre un meilleur accès aux sites réactifs de la charge. Parmi les différents procédés d'encapsulation utilisables, on peut utiliser par exemple l'encapsulation en lit d'air fluidisé : le composé neutralisant le composé acide est enrobé d'un agent qui l'isole de la matrice polymère.

L'utilisation des charges réactives en mélange avec des matériaux polymère peut induire des modifications de propriétés mécaniques et peut occasionner des problèmes de mise en oeuvre lors de l'extrusion et de la mise en forme de la gaine polymère. Selon l'invention, on peut ajouter des additifs permettant de limiter les défauts d'écoulement des compositions et d'améliorer les propriétés mécaniques de la gaine. Les additifs peuvent être ajoutés lors du mélange du matériau polymère avec les agents réactifs, à une température supérieure à la température de fusion du matériau polymère.

Pour des taux de charges importants, on peut utiliser des composés qui permettent de conserver des propriétés d'allongement au seuil de plasticité ainsi qu'à la rupture et de modules d'Young compatibles avec les contraintes soumises aux conduites pétrolières. Par exemple on peut ajouter des élastomères thermoplastiques comme des poly(ethylène-octène), des poly(éthylène-propylène), des poly(éthylène-butène) commercialisés par Dow sous le nom commercial Engage^{™}, les copolymères blocks tels que les poly(styrène/éthylène-butylène/styrène) greffés ou non greffés dans du polyéthylène afin de favoriser la mise en oeuvre et pour améliorer les propriétés mécaniques du polymère. De plus, on peut ajouter des copolymères de type Lotader commercialisés par la société Arkema dans les polyamides pour favoriser la compatibilité de l'agent neutralisant les composés acides avec la matrice polymère.

On peut également favoriser la création d'interfaces fortes entre l'agent neutralisant les composés acides et le polymère de la gaine d'étanchéité. Ainsi l'agent neutralisant les composés acides peut être traité chimiquement en surface avec des silanes. On peut également ajouter des polyoléfines greffées anhydride maléique pour augmenter les interactions charge-matrice.

Selon l'invention, la phase de préparation et de mise en oeuvre du mélange de matériau polymère et de charges chimiquement réactives avec les composés acides H₂S et/ou CO₂ est importante. En effet, de préférence, les charges chimiquement réactives sont réparties de façon homogène dans le matériau polymère. En effet, une répartition homogène des charges réactives permet de neutraliser les composés acides sur toute la surface de la gaine et évite la formation de passages privilégiés de composés acides à travers la gaine ce qui conduirait à une sortie rapide de l'acide à travers la gaine et donc à une mauvaise efficacité. De plus, une concentration locale inhomogène de charges réactives dans la gaine pourrait provoquer des faiblesses de tenue mécanique de la gaine. Les inventeurs ont découvert qu'en dessous d'une valeur de granulométrie, la répartition de la charge dans la matrice polymère n'est plus suffisamment homogène pour améliorer l'action de la charge. En conséquence, selon l'invention, on met en oeuvre de préférence des charges sous forme de granulat dont la granulométrie est supérieure à 0,02 µm.

Les charges chimiquement actives avec les composés acides peuvent être introduites dans le polymère de base soit sous forme de poudre sèche soit sous forme de solution en suspension. L'introduction peut se faire lors de la polymérisation in situ, lors de la phase de "compoundage" ou encore via l'utilisation d'un "mélange-maître".

Pour obtenir une dispersion homogène de charges de granulométrie plus faible dans la matrice polymère, on peut par exemple modifier chimiquement la surface des charges réactives, ou ajouter des agents dispersants. On peut également modifier les profils de la vis d'extrusion, les conditions opératoires tels que le débit, la température afin d'obtenir un mélange correct. De plus, on peut réaliser le mélange de matériau polymère avec les charges réactives en plusieurs opérations. Par exemple, on réalise un pré-mélange avec une concentration en charge réactive élevée. Le pré-mélange est ensuite dilué lors d'une opération ultérieure.

Afin de limiter la vitesse de diffusion à travers la gaine de matériau polymère, on peut introduire des charges de forme lamellaire tels que les mica, des smectites naturelles ou synthétiques (montmorillonites, laponites, saponites, bentonites). Les charges de forme lamellaire présentent une forme plane, c'est-à-dire une surface plate importante par rapport à l'épaisseur. En général, on caractérise une charge lamellaire par un facteur de forme qui donne la valeur de sa plus grande dimension sur sa plus faible (en général l'épaisseur). Selon l'invention, on choisit des charges dont le facteur de forme est supérieur à 20 et inférieur à 500. Les particules de composé lamellaire nanométrique, en fraction massique faible, permettent d'améliorer significativement les propriétés de la matrice polymère. Préférentiellement, on ajoute une fraction massique de composés lamellaire inférieure à 10%. En outre, les composés lamellaires peuvent comprendre un agent d'intercalation qui est capable d'intercaler et/ou d'exfolier les lamelles des particules de façon à séparer complètement les lamelles des unes des autres dans la matrice polymère. Les charges lamellaires permettent de réduire la perméabilité de la gaine polymère via un effet de tortuosité. En effet, les particules de composés acides doivent parcourir un chemin beaucoup plus long dû à la présence d'objets imperméables qu'ils doivent contourner. Plus le facteur de forme est grand, plus le chemin de diffusion est grand. De plus, l'augmentation du chemin de diffusion permet d'augmenter les probabilités de rencontre des molécules de composés acides avec les charges réactives. Ainsi ces charges lamellaires permettent, non seulement de ralentir la diffusion des composés acides à travers la gaine, mais également d'augmenter l'efficacité des charges réactives vis-à-vis des composés acides.

On peut également réduire la diffusion des gaz acides à travers la gaine en utilisant des charges qui piègent les gaz acides de façon réversible, par exemple des particules de charbon actif, des zéolithes ou des alumines. Ce piégeage temporaire permettant d'une part, de ralentir le passage des molécules acides au sein de la matrice polymère et, d'autre part, d'augmenter la probabilité de réaction entre une molécule acide et une charge réactive. Tout ceci tendant à augmenter l'efficacité de la membrane polymère comportant des charges réactives de façon irréversible ainsi que des charges réactives de façon réversible.

Selon un mode particulier de l'invention, on réalise la gaine d'étanchéité respectivement référencée 2 ou 4 sur la figure 1, ou 9 sur la figure 2 en plusieurs couches.

La réalisation d'une gaine polymère multicouche permet de dédier une couche à la fonction de barrière aux composés acides et de faire supporter les contraintes mécaniques ou thermiques à une autre couche.

En référence à la figure 3, on réalise la gaine G en deux couches C1 et C2. Les couches C1 et C2 sont successivement extrudées. Par exemple, on extrude la couche C1 sur un noyau, puis on extrude la couche C2 sur la couche C1 pour réaliser une gaine dont la couche C1 est à l'intérieur et la couche C2 est à l'extérieur. La couche C1 est réalisée avec un matériau polymère sans agents neutralisants, afin d'avoir une bonne tenue mécanique et thermique de la gaine G. De plus, la couche C1 permet de limiter le débit de composés acides à travers la gaine G. La couche C2 comporte un mélange de matériau polymère et de charges d'agents neutralisants pour faire barrière aux composés acides. Ce mode de réalisation permet de choisir un matériau polymère pour réaliser la couche C2 qui accepte bien la présence des agents neutralisants. De préférence les couches C1 et C2 sont réalisées en polymère tels que : polyéthylènes, polyamides, polymères fluorés. On peut donner comme exemple, une première couche C1 en Polyamide 11 et une deuxième couche C2 en Polyéthylène chargé avec un oxyde métallique tel que du ZnO. La couche C1 assure le rôle de gaine d'étanchéité, elle limite donc le débit en gaz acides que verra la couche C2. D'autre part, elle se comporte également comme une barrière thermique puisqu'elle limite la température subie par la couche C2.

Alternativement, on peut inverser l'ordre des couches C1 et C2 et la nature du polymère.

L'exemple décrit ci-après permet d'illustrer le bénéfice procuré par l'emploi de particules actives à fortes surface spécifique dans une conduite flexible selon l'invention. La conduite transporte un fluide comportant de l'H₂S à 0,3 bar de pression partielle, le fluide étant à une température de 60°C. La conduite comporte une gaine d'étanchéité bicouche comme décrit en référence à la figure 3. La couche C2 comporte 30% poids d'oxydes de zinc (ZnO). L'épaisseur de la couche C2 est déterminée de manière à ce que les oxydes de zinc soient efficaces pendant une durée de fonctionnement 20 ans (au bout des 20 ans, la totalité du ZnO a réagi avec l'H₂S) :
- lorsque les charges de ZnO présentent une surface spécifique de 10 m²/g, l'épaisseur de la couche C2 est estimée à 12 mm,
- lorsque les charges de ZnO présentent une surface spécifique de 50 m²/g, l'épaisseur de la couche C2 est estimée à 6 mm.

En conséquence, l'utilisation d'agents chimiquement actifs à forte surface spécifique (par exemple, avantageusement supérieure à 10 m²/g, voire très avantageusement supérieure à 50 m²/g) permet de limiter l'épaisseur de la gaine d'étanchéité, et donc de réduire la raideur en flexion de la conduite.

Pour réduire la perméabilité de la gaine G et pour réduire les concentrations de composés acides à l'interface I entre les couches C1 et C2, selon l'invention, on peut introduire des charges lamellaires dans la couche C1 (charges lamellaires présentant un facteur de forme supérieur à 20 et comportant éventuellement un agent d'intercalation, fraction massique maximale en particules inorganiques de 10%).

Pour limiter l'accumulation de composés acides à l'interface entre les deux couches, on peut déposer un revêtement comportant des produits chimiquement actifs au niveau de l'interface. On extrude l'une des couches C1 ou C2 puis on dépose sur l'extérieur de la couche ledit revêtement chargé en agents neutralisants, puis on extrude sur la couche du revêtement la deuxième couche.

Les produits chimiquement actifs contenus dans le revêtement peuvent être des oxydes métalliques, alcalins ou alcalinoterreux ou des amines. Le revêtement peut être une fine couche de matériau de l'invention déposée par enroulement sous forme de bande par exemple.

Le revêtement peut être une peinture, un tissu organique ou minéral enduit du matériau de l'invention. Le revêtement peut être déposé sous forme liquide et séché, comme une peinture. Il doit être souple afin d'éviter, par rupture prématurée, la formation de passages privilégiés pour les molécules acides.

## Revendications

1. Conduite pour transporter un effluent pétrolier comportant au moins l'un des composés acides CO₂ et H₂S, la conduite comportant au moins un élément métallique et une gaine tubulaire en matériau polymère, l'élément métallique étant disposé à l'extérieur de la gaine, la gaine comportant un mélange d'un matériau polymère avec une quantité déterminée de produits chimiquement actifs avec lesdits composés acides de façon à neutraliser irréversiblement les effets corrosifs desdits composés et de limiter les effets corrosifs sur lesdits éléments métalliques, la conduite étant **caractérisée en ce que** les produits chimiquement actifs sont introduits dans la gaine sous forme de particules de surface spécifique supérieure à 5 m²/g, et dans laquelle les produits chimiquement actifs sont choisis parmi les oxydes métalliques choisis dans le groupe constitué du PbO, ZnO, NiO, CoO, CdO, CuO, SnO2, MoO3, Fe3O4, Ag2O, CrO₂, CrO₃, Cr2O3.

2. Conduite selon la revendication 1, dans laquelle les produits chimiquement actifs sont introduits dans la gaine sous forme de particules de granulométrie supérieure à 0,02 µm.

3. Conduite selon la revendication 1, dans laquelle la gaine comporte en outre des charges de forme lamellaire ayant un coefficient de forme supérieur à 20, la concentration massique desdites charges lamellaires dans la gaine étant égale au maximum à 10%.

4. Conduite selon la revendication 1, dans laquelle la gaine comporte en outre des charges absorbantes qui piègent les composés acides, les charges absorbantes étant choisies parmi les charbons actifs, les zéolites et les alumines.

5. Conduite selon l'une des revendications précédentes, dans laquelle la gaine comporte des additifs pour améliorer les propriétés mécaniques de la gaine, les additifs étant choisis parmi les poly(ethylène-octène), des poly(éthylène- propylène), des polyéthylène-butène) et les poly(styrène/éthylène- butylène/styrène).

6. Conduite selon l'une des revendications précédentes, dans laquelle les produits chimiquement actifs sont traités chimiquement en surface avec des silanes.

7. Conduite selon l'une des revendications précédentes, dans laquelle la gaine comporte des polyoléfines greffées anhydride maléique.

8. Conduite selon l'une des revendications précédentes, dans laquelle la gaine comporte au moins deux couches, une première couche comportant un premier matériau polymère et une deuxième couche comportant un second matériau polymère contenant ladite quantité déterminée de produits chimiquement actifs.

9. Conduite selon la revendication 8, dans laquelle la première couche comporte en outre des charges de forme lamellaires ayant un coefficient de forme supérieur à 20, la concentration massique desdites charges lamellaires dans la première couche étant égale au maximum à 10%.

10. Conduite selon l'une des revendications 8 et 9, dans laquelle on dépose un revêtement entre les deux couches, ledit revêtement contenant une quantité desdits produits chimiquement actifs.

11. Conduite selon l'une des revendications 1 à 7, dans laquelle ladite quantité déterminée de produits chimiquement actifs est répartie dans toute l'épaisseur de ladite gaine.

## Patentansprüche

1. Leitung zum Transport eines Erdölabflusses, der mindestens eine der Säureverbindungen CO₂ und H₂S enthält, wobei die Leitung mindestens ein Metallelement und eine röhrenförmige Hülle aus Polymermaterial umfasst, wobei das Metallelement außerhalb der Hülle angeordnet ist, die Hülle enthält eine Mischung aus einem Polymermaterial mit einer bestimmten Menge an Produkten, die mit den genannten Säureverbindungen chemisch aktiv sind, um die korrosiven Wirkungen der genannten Verbindungen irreversibel zu neutralisieren und die korrosiven Wirkungen auf die genannten Metallelemente zu begrenzen, wobei die Leitung **dadurch gekennzeichnet ist, dass** die chemisch aktiven Produkte in die Hülle in Form von Partikeln mit einer spezifischen Oberfläche von mehr als 5 m²/g eingebracht werden und die chemisch aktiven Produkte aus Metalloxiden ausgewählt sind, die aus der Gruppe bestehend aus PbO, ZnO, NiO, CoO, CdO, CuO, SnO2, MoO3, Fe3O4, Ag2O, CrO₂, CrO₃, Cr2O3 ausgewählt sind.

2. Leitung nach Anspruch 1, wobei die chemisch aktiven Stoffe in Form von Partikeln mit einer Korngröße von mehr als 0,02 µm in die Hülle eingebracht werden.

3. Leitung nach Anspruch 1, wobei die Hülle zusätzlich lamellenförmige Füllstoffe mit einem Formkoeffizienten von mehr als 20 enthält, wobei die Massenkonzentration der lamellenförmigen Füllstoffe in der Hülle höchstens 10 % beträgt.

4. Leitung nach Anspruch 1, wobei die Hülle zusätzlich absorbierende Füllstoffe enthält, die Säureverbindungen einfangen, wobei die absorbierenden Füllstoffe aus Aktivkohle, Zeolithen und Aluminiumoxid ausgewählt sind.

5. Leitung nach einem der vorhergehenden Ansprüche, wobei die Hülle Additive zur Verbesserung der mechanischen Eigenschaften der Hülle aufweist, wobei die Additive aus Poly(ethylenocten), Poly(ethylenpropylen), Poly(ethylenbuten) und Poly(styrol/ethylenbutylen/styrol) ausgewählt sind.

6. Leitung nach einem der vorhergehenden Ansprüche, wobei die chemisch aktiven Produkte mit Silanen chemisch oberflächenbehandelt sind.

7. Leitung nach einem der vorhergehenden Ansprüche, wobei die Hülle Maleinsäureanhydrid-gepfropfte Polyolefine enthält.

8. Leitung nach einem der vorhergehenden Ansprüche, wobei die Hülle mindestens zwei Schichten umfasst, wobei eine erste Schicht ein erstes Polymermaterial umfasst und eine zweite Schicht ein zweites Polymermaterial umfasst, das die bestimmte Menge an chemisch aktiven Stoffen enthält.

9. Leitung nach Anspruch 8, wobei die erste Schicht zusätzlich lamellenförmige Füllstoffe mit einem Formkoeffizienten von mehr als 20 enthält, wobei die Massenkonzentration der lamellenförmigen Füllstoffe in der ersten Schicht höchstens 10 % beträgt.

10. Leitung nach einem der Ansprüche 8 oder 9, bei der zwischen den beiden Schichten eine Beschichtung aufgebracht wird, wobei die Beschichtung eine Menge der chemisch aktiven Stoffe enthält.

11. Leitung nach einem der Ansprüche 1 bis 7, wobei die bestimmte Menge an chemisch aktiven Stoffen über die gesamte Dicke der Hülle verteilt ist.

## Claims

1. A pipe for transporting a petroleum effluent comprising at least one of the acid compounds CO₂ and H₂S, the pipe comprising at least one metal element and a tubular sheath of polymer material, the metal element being disposed outside the sheath, the sheath comprising a mixture of a polymer material with a determined quantity of products that are chemically active with said acid compounds so as to neutralise irreversibly the corrosive effects on the said metal elements, the pipe being **characterised in that** the chemically active products are introduced into the sheath in the form of particles with a specific surface area greater than 5m²/g, and in which the chemically active products are chosen from metal oxides chosen from the group consisting of PbO, ZnO, NiO, CoO, CdO, CuO, SnO2, MoO3, Fe3O4, Ag2O, CrO₂, CrO3 and Cr2O3.

2. A pipe as claimed in claim 1, in which the chemically active products are introduced into the sheath in the form of particles with a particle size greater than 0.02 µm.

3. A pipe as claimed in claim 1, in which the sheath further comprises lamellar fillers having a shape coefficient greater than 20, the mass concentration of said lamellar fillers in the sheath being equal to at most 10%.

4. A pipe as claimed in claim 1, in which the sheath additionally comprises absorbent fillers which trap acid compounds, the absorbent fillers being chosen from activated carbons, zeolites and aluminas.

5. A pipe according to one of the preceding claims, in which the sheath comprises additives to improve the mechanical properties of the sheath, the additives being selected from poly(ethylene-octene), poly(ethylene-propylene), poly(ethylene-butene) and poly(styrene/ethylenebutylene/styrene).

6. Pipe according to one of the preceding claims, in which the chemically active products are chemically treated on the surface with silanes.

7. Pipe according to one of the preceding claims, in which the sheath comprises maleic anhydride grafted polyolefins.

8. A pipe according to one of the preceding claims, in which the sheath comprises at least two layers, a first layer comprising a first polymeric material and a second layer comprising a second polymeric material containing said determined quantity of chemically active products.

9. A pipe according to claim 8, wherein the first layer further comprises lamellar shaped fillers having a shape coefficient greater than 20, the mass concentration of said lamellar fillers in the first layer being equal to at most 10%.

10. Pipe according to one of claims 8 and 9, in which a coating is deposited between the two layers, said coating containing a quantity of said chemically active products.

11. A pipe according to one of claims 1 to 7, in which said determined quantity of chemically active products is distributed throughout the thickness of said sheath.
